# EUROPEAN PATENT APPLICATION

(11) **EP 1 103 899 A2**
(43) Date of publication of application: **30.05.2001**
(21) Application number: 00204233.1
(22) Date of filing: 28.11.2000
(51) Int. Cl.: G06F 17/21

(54) **A method and system for generating display screen templates**

(30) Priority: 29.11.1999 US 167682 P
(71) Applicant: Citicorp Development Center, Inc., Los Angeles, California 90066 (US)
(72) Inventor: Kwong, Victor C., Los Angeles, CA 90032 (US); Lissauer, George, Los Angeles, CA 90066 (US); Parekh, Dilip J., Los Angeles, CA 90045 (US)
(74) Representative: Hynell, Magnus

(57) **Abstract**

The present invention pertains to an automated system for creating and customizing a screen display, comprising: a customizer user interface for interactively presenting a sequence of customizer dialogs each having one or more controls, the controls being responsive to input from a writer of the application project generator to thereby choose from a plurality of generator options; and a customizer tool being responsive to the customizer user interface for creating a screen according to the generator options chosen by the writer, the application project generator comprising: a device template file generator for generating and editing canonical template files and device template files; a screen template generator for generating and editing screen template files; a plurality of canonical template files, a plurality of screen definition files, and a plurality of device templates files; and wherein the screen display is created in HyperText markup language.

## Description

### BACKGROUND OF THE INVENTION

### Field of the Invention

The present invention relates to the generation of display screen templates and, more particularly, to an improved system and method for generating display screen templates.

### Description of the Related Art

Many software applications require the creation of one or more display screens for inputting and outputting information between the software application and the user. Increasingly these display screens are constructed as templates, rather than as completely encoded displays. The template construction divides the display screen into fields that are encoded and fields that display or seek information extracted from one or more databases or applications communicating with the software application. For example, an automated teller machine (ATM) can be provided with display screens to display to a user his/her account balance. The account balance display screen would have some fields that are common to all account balance display screen, such as the name and logo of the bank. Other fields of the account balance display screen would be specific to the user, such as the account number and the amount of the account balance. Such screens, which provide flexibility to the computer system, require the use of screen templates.

Creation of such screen templates has conventionally been accomplished through the use of a screen editing program or a word processing program. The display screen file is then integrated into the software application. Unfortunately, such an approach is often slow and can introduce errors into the screen template.

In addition, the growing use of the Internet has resulted in a concomitant increase in the use of a HyperText Markup Language (HTML) to create screen displays. Such HTML screen displays are utilized in a wide number of devices, including handheld personal computers and personal digital assistants, and cell phones. Thus, the creation of template screens employing HTML would facilitate generation of screen displays. From a single source HTML file display screens can be constructed for a large array of devices.

Thus, there remains a need for a more efficient and less error-prone system and method for generating display screen templates.

### BRIEF SUMMARY OF THE INVENTION

Accordingly, it is an object of the present invention to provide a more efficient system and method for generating display screen templates.

It as another object of the present invention to provide a more accurate system and method for generating display screen templates.

These objects, among others, have been provided by the software tool of the present invention which automatically generates screen template files from a HTML file.

### BRIEF DESCRIPTION OF THE FIGURE

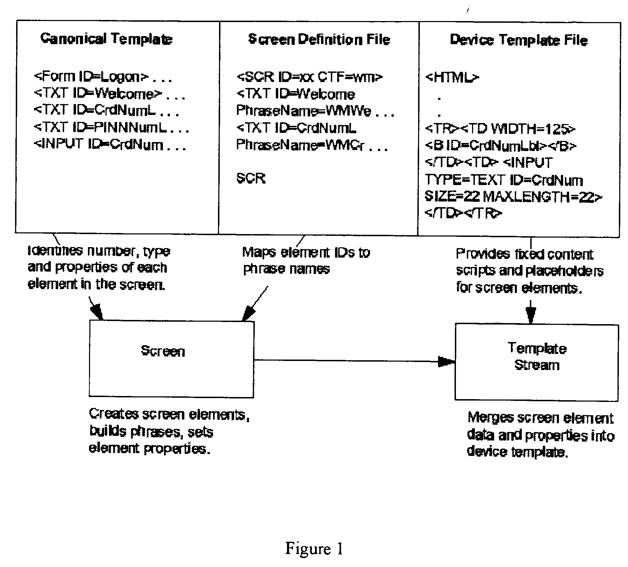

Figure 1 is a diagram of the components of the screen template generator.

### DETAILED DESCRIPTION OF THE INVENTION

Referring now in detail to embodiments of the invention which provide an improved system and method for generating display screen templates, such embodiments of the invention are found in Figure 1.

A network delivery system (NTDS), which provides applications and files to a network of computers, can use templates to create customer-application screens. The present invention referred to as a screen template generator (STG) is a set of tools designed to generate these screen templates.

An NTDS application can be considered to be a dialog between a user and the NTDS server. The NTDS uses templates to create customer-application screens. These templates can be customized for each application variation, for devices, and for regional requirements. As illustrated in Figure 1, NTDS uses three template files, a canonical template file, a screen definition file, and a device template file, to generate application screens. The screen template generator invention automates the creation of these screen template files. Each file defines a different aspect of the customer screen generation process. A dialog screen contains elements defined in Canonical Template Files (CTF), Screen Definition Files (SDF), and Device Template Files (DTF). The Screen Object and Presentation Manager use the information contained in these files to create the dialog screens during runtime. The DTF files contain device-specific information for a particular output device and is created by looking at an HTML file, which serves as a template (created from an APS specification), and substituting certain of its tokens with its DTF versions. DTF tokens have identifiers that can be used at runtime to reference the elements in the dialog, so that its properties can be dynamically controlled. The CTF file contains all the identifiers used in the DTF file. SDF files are subsets of CTF files and are used to simplify the handling of fixed phrases residing in databases. The process of manually creating these files is tedious and error-prone. The purpose of the Screen Template Generator is to simplify and automate the creation of these template files.

Canonical template files define individual screen elements and their default properties. Elements of the canonical template file can include text descriptions, images, drop-down list boxes, text input boxes, among others. Elements are tagged with an identifier that maps to both the DTF and SDF (if used).

Regarding device template files, the NTDS could support a number of different devices, for example, in a banking environment, the devices could include a home banking device, a personal digital assistant (PDA) device, a screen phone device, among others. The device template files define the device-specific presentation of a screen from the elements common to all devices defined by the device template file. Device template files could include: any text style information (for example, fonts, point size, weight) and fixed content, scripts and display parameters. The device template file has placeholders for each of the screen elements identified in the canonical template file. The device template and the screen content are merged before the resulting data (usually formatted in HTML) is displayed.

Screen definition files are subsets of canonical template files and are used to simplify the handling of fixed phrases residing in a database. Canonical template files map element ID's to phrase names. The NTDS screen object automatically builds these phrases and inserts them as values in the corresponding screen elements.

For example, in a server environment, when a customer selects a link, a request goes back to a mini-application that presented the screen to either present the next screen in the sequence or to contact the navigation shell to start up a different mini-application and present a different screen. The navigation shell handles customer input to the navigational areas of the screen. It creates, starts and stops dialog components, and template streams. It also allocates screen real estate to dialogs. Dialogs initialize display data by setting screen and element properties. Dialogs read customer data from input element properties and execute transactions.

With regard to designing customer screens, the screen object (created by either the navigation shell or the mini-application) defines the customer screen. The screen object initializes screen elements from the screen definition file and the canonical template file, using canonical template files to create its dependent objects. The screen object displays three of its properties: language object, screen ID, and template ID. The language object property identifies the language to be used, the country the application will run in, any regional properties, among others. The screen OD property maps to a specific screen definition file (which is based on a canonical template file) from which the screen object will set the template ID, build dependent objects, and perform phrase lookups providing the language object property has been set. The template ID property causes the screen object to search the NTDS runtime templates for the identified canonical template file. The template ID maps to a specific canonical template file from which the screen object builds all of its dependent objects such as choices, text areas, and images. Resetting the template ID property removes any previously created dependent objects and creates new dependent objects.

The template stream object generates an HTML-like stream from the information in the screen object and sends that stream to the presentation manager application to be merged with the device template file for the final display. By default, the stream uses the template ID setting to locate the device template file. (The device template name property can be used to specify the device template file.

The presentation manager application reads the device template file and maps the stream (generated by the template stream) to the presentation manager application. The presentation manager application creates the final screen presentation and manages logical display streams. It basically maps content data into device-dependent templates and maps a canonical representation of information on pages into a specific style layout in a device-specific presentation format. Thus, the same application can have different presentation styles on different device types (for example, personal computer (PC), PDA, screen phone, CAT, or a third-party kiosk terminal).

The Presentation Manager uses the device template file templates to provide a consistent layout style across pages having similar choices, data fields, and forms. It can also "drop out" fields and choices for which there is no data. Thus, a template can be the superset of all possible objects on a page.

The screen template generator invention comprises two application tools: the device template file generator, which develops device template file and canonical template file templates) and the screen definition generator, which creates or edits screen definition files.

As an example, to start template generation, an HTML version of the application is first created. This file is based on the APS. All nonstandard HTML tags must be defined in a rule file. Next a rule file is created. The rule.ini file is provided with the application and contains the most commonly used HTML application tags and rules. In adding or modifying a tag, one makes a copy of rule.ini and, using the screen template generator's active rules editor, modifies the tags and rules as necessary.

Then the device template generator is run to create the device template file tokens and the canonical template file tokens. In a preferred embodiment, processing can be done in two modes--automatic or interactive. In a preferred interactive mode, tokens can be edited during template generation.

In some circumstances, because of the range of input, the device file generator may not be able to process all data provided. For example, with a variety of inputs, there might not be a fixed set of rules that can be applied to all possible cases when generating canonical template files and device template files from an HTML source. Each user may have implemented a slightly different rule for creating device template file tokens from the same HTML tag. With a large number of possibilities, there might be some instances in which some manual modification of the generated output files may be necessary. In another situation, some HTML files may contain complicated JAVA scripts containing tokens that must be changed at runtime. Due to the complexity of these scripts and any special rules required to process them, the screen template generator invention may not process tokens in JAVA scripts.

The following provides the steps in generation of a device template file and a canonical template file.
1. The HTML tag is SELECT (it will be displayed in the HTML pane).
2. The SELECT tag is listed in the rule file. (A CTF token will be generated for the Select tag. One rule is defined for the Select tag.)
3. The rule file defines a canonical template file Identifier named SEL. (This Identifier name can be edited.)
4. The device template file token is produced as output after the rule is applied: Screen definition files are created and edited through the screen template generator's second tool, the screen definition file generator. Screen definition files are subsets of canonical template files and are used to simplify the handling of fixed phrases residing in the databases. To create an SDF, one can:
   1. generate the canonical template files which contain a list of various screen elements;
   2. from screen definition file generator, open the phrase database;
   3. select the canonical template file and the phrase name that it will be linked to. One can create a new screen definition file or edit an existing one. When a new screen definition file is created, it is associated with an existing canonical template file. Phrase names for the elements can be obtained from one or more phrase databases.

In addition to the phrase name, one can specify a media for the element and enter a comment describing the element.

Once the canonical template files, device template files, and the screen template files are generated, they are made available to the application. This can be accomplished by:
1. copying the template files and the phrase database to a NTDS directory;
2. setting the language object property of the Screen Object in the mini-application. (This property tells the Screen Object the application language and its regional properties, so it can render database phrases.)
3. setting either Template ID or Screen ID in the Screen Object.

In one preferred embodiment, the NTDS uses templates to create customer-application screens. These templates can be customized for each application variation, for devices, and for regional requirements. The screen template generator software tool automates the creation of these template files. Each file defines a different aspect of the customer screen generation process.

CTF's define individual screen elements and their default properties. Elements can include text descriptions, images, drop-down list boxes, text, and input boxes, among others, and are tagged with an identifier that maps to both the DTF and SDF, if used.

With regard to DTF's, NTDS supports a number of different devices, including home banking applications, personal data assistants, screen phones and others. DTF's define the device-specific presentation of a screen from the elements common to all devices defined by the CTF. DTF's include any text style information (for example, fonts, point size, weight), fixed content, scripts and display parameters. The file has placeholders for each of the screen elements identified in the CTF. The device template and the screen content are merged before the resulting data (usually HTML) is displayed.

SDF's are subsets of CTF's and are used to simplify the handling of fixed phrases residing in the databases. CTF's map element IDs to phrase names. The NTDS Screen Object automatically builds these phrases and inserts them as values in the corresponding screen elements.

In a preferred embodiment of the present invention, when a user selects a link on a display screen, a request goes back to the mini-application that presented the screen either (1) to present the next screen in the sequence or (2) to contact the navigation shell to start up a different mini-application and present a different screen. The navigation shell handles user input to the navigational areas of the screen; it creates, starts, and stops dialog components and template streams. It also allocates screen real estate to dialogs. Dialogs initialize display data by setting screen and element properties, read customer data from input element properties, and execute transactions.

The Screen Object (created by either the navigation shell or the mini-application) defines the customer screen. It initializes screen elements from the SDF's and CTF's, using CTF's to create its dependent objects. The Screen Object preferably comprises three properties: LanguageObject, ScreenID, and TemplateID. LanguageObject identifies the language to be used, the country the application runs in, and regional properties, among others. ScreenID maps to a specific SDF (which is based on a CTF) from which the Screen Object sets the TemplateID, build dependent objects, and perform phrase lookups. TemplateID causes the Screen Object to search the NTDS runtime templates for the named CTF. The TemplateID then maps to a specific CTF from which the Screen Object builds all of its dependent objects such as choices, text areas, and images. Resetting the TemplateID property destroys any previously created dependent objects and creates new dependent objects.

The template stream object generates an HTML-like stream from the information in the Screen Object and sends that stream to the presentation manager to be merged with the DTF for the final display. By default, the stream preferably uses the TemplateID setting to locate the DTF.

The presentation manager reads the DTF and maps the stream (generated by the template stream) to it. The presentation manager creates the final screen presentation and manages logical display streams. In carrying out these functions, it maps content data into device-dependent templates and maps a canonical representation of information on pages into a specific style layout in a device-specific presentation format. Thus, the same application can have different presentation styles on different device types, for example, personal computer, personal data assistant, screen phone, or a third-party kiosk terminal.

The presentation manager preferably uses the DTF templates to enforce consistent layout style across pages having similar choices, data fields, and forms. It can "drop out" fields and choices for which there is no data. This means that a template can be the superset of all possible objects on a page.

In an embodiment of the present invention, the screen template generator software tool comprises two components, a Device Template File Generator (DTFGen) to develop DTF and CTF templates, and a Screen Definition File Generator (SDFGen) to create or edit SDF's.

Before starting template generation, an HTML version of the application must be created. This file is based on the Application Product Specification (APS). Additionally, a rule file must be created before template generation. An initial rule file, containing the most commonly used HTML application tags and rules, is provided with the screen template generator. The rule file defines criteria for creating the template files for each HTML tag.

DTFGen creates the DTF and CTF files. When generating templates, the DTFGen scrolls through the HTML file to find tokens that need to be converted to a DTF format and then converts them. This conversion can be done either in the automatic or the manual mode.

In the automatic mode, if DTFGen encounters a token requiring special handling, the program automatically processes the token according to a set of rules defined by the rule file. After the original token and its contents have been processed, the resulting DTF tokens are written to the DTF file and the corresponding CTF tokens are written to the CTF file.

In the manual mode, the programmer has more control over each substitution, as each substitution can be monitored and controlled, but automation is drastically reduced. For example in the manual mode, for each substitution, the user can specify the rule to apply and the name of the identifier to use, whereas in the fully automated mode all decisions are predetermined. In addition, the programmer may also skip substitution entirely for any particular step, as the defined rule may not yield the desired results in every case.

Screen Definition Files (SDF's) are created and edited through the screen template generator's second component, the SDF Generator (SDFGen). SDF files are subsets of CTF files and are used to simplify the handling of fixed phrases residing in the databases. An SDF is based on the screen elements found in a Canonical Template File. Each element in the SDF is associated with a phrase name from a phrase database. SDF's map CTF element IDs to phrase names. This simplifies the handling of fixed phrases residing in databases. For example, SDF elements can include: the phrase names from phrase databases; a media for the element; and a comment describing the element. An active rules editor can be used to create and modify tags, rules, and CTF tokens.

To create an SDF, a CTF file containing a list of various screen elements is first opened. Then, from SDFGen, the phrase database is opened. Finally, a subset of tokens contained in the CTF file require a phrase name. Once the token is associated with a phrase name, then it is written to an SDF file. Once a user selects a token, then its phrase name is looked up in the phrase database and selected from the list.

A new SDF file can be created or an existing one can be edited. Phrase names for the elements can be obtained from one or more phrase databases. In addition to the phrase name, in another embodiment of the present invention, a media can be specified for the element and comment describing the element can be entered.

Once the CTF's, DTF's, and SDF's are generated, they are made available to the application.

As described above, two input files are required for screen template generation: an HTML source file and a rule file.

In another embodiment of the present invention, the DTFGen work area comprises the DTFGen window and the Template Generation Control (TGC) panels. The DTFGen window, in one embodiment, has three tabs: the HTML source file, the browser version of the HTML source file, and the working DTF output file, during and after template generation. The TGC window preferably contains five panels: the HTML panel, the rule panel, the DTF panel, the CTF panel, and the identifier panel. During template generation processing, the HTML panel displays the specific tag being processed, the rule panel displays the rule that is applied to the tag being processed, the DTF panel and the CTF panel display the outputs generated for the tag being processed, and the identifier panel displays the identifier generated for the tag being processed.

In a preferred embodiment, processing options are available before or during screen template generation. These processing options are similar to rules in that they affect the way the output tokens are generated. However, they are dissimilar to rules in that they are applied to all defined tags, whereas rules are only applied to the specific tags for which they are defined.

In another preferred embodiment of the present invention, the programmer employs conventional HTML scripting styles to help the screen template generator software tool delimit each HTML command. In an alternate embodiment of the present invention, the screen template generator software tool can have a level of browser intelligence so as to recognize when an HTML command ends. Conventional browsers sometimes recognize where a command ends, even without a terminating tag, because the browser recognizes which markup tags are valid within a particular command. When the browser sees a new tag that is not a valid markup within the current command, it assumes that the current command has terminated.

The architecture of the screen template generator software tool can be component-based and both language- and implementation-independent This architecture allows the tool to be subdivided into modules that can be implemented independently.

Presentation is the primary domain of the user interface (UI). The UI presents to the programmer the work in progress by displaying the working CTF and DTF files as substitutions are made according to the programmer-specified rules. The UI also serves as the mechanism by which the programmer communicates other information with the software tool. For example, in a preferred embodiment the UI provides a means for the programmer to setup certain configuration information, such as DTF, CTF, HTML, and rule file directory locations, and the naming convention to use for auto-generation of CTF and DTF token identifiers, among others. Additionally, most of the task of generating SDF files is done in the UI.

In a preferred embodiment, the UI may also employ ActiveX components as needed.

In other preferred embodiments of the present invention, the screen template generator tool can contain other aspects. For example, a rule generator component of the software tool can interact with the programmer to create the syntax and rules for HTML tags that require special handling. The syntax allows the screen template generator software tool to recognize these tags; the rules tell the software tool how to process the tags. The rule generator can convert the programmer inputs into the format of a rule file that the rule interpreter can understand. The rule interpreter then communicates the rule information to the tool.

The rule interpreter can also take the information in the rule file and translate it to an internal protocol for the screen template generator. This can involve initializing certain data structures used by the screen template generator in its rule handlers. The screen template generator can then use the translated information to process each special token accordingly.

The rule handler is preferably a collection of subroutines, which performs the actual act of substituting/replacing elements of an HTML command in converting it to a DTF token. The processing of an HTML command is based on the given rule for a particular HTML tag defined in the rule file. For example, a rule handler for the <INPUT> tag may be a subroutine that removes all except the "NAME" attribute from it and outputs the result as the return value.

The rule repository is preferably a collection of rule files. The programmer can select from amongst a list of the rule files in the repository while running the screen template generator.

The screen template generator tool can employ one or more parsers to scan and process the input stream that consists of data from an HTML file. The parser comprises state machines to simplify the handling of the lexical analysis and grouping of input into tokens. The parser incorporates a finite state machine, the states of which can be further decomposed into a state machine of its own.

An activity logger can record each substitution made in generating a DTF file from an HTML input file. The activity information can be kept in a log file, which can be viewed or printed.

The rule file can preferably be divided into two main sections. The first section is a reference section containing information about predefined elements, syntax and rules. The screen template generator is "pre-programmed" to handle these basic items, which serve as building blocks for other elements, syntax, and rules. The second section holds new items defined by the programmer. These include the tags (elements) to be supported, the syntax to be used to recognize these tags, and the rules to be applied.

The Screen Template Generator will get its input data from the user specified HTML and rule files. From the HTML file, the Screen Template Generator will scan for tokens that may contain data requiring special handling. Generally, special handling involves removing certain attributes or text within or adjacent to the tag and then inserting an identifier inside the token. The identifiers are those that will appear in the generated CTF and DTF output files. The user will be able to setup the locations for the CTF and DTF output files, as well as the HTML and rule input files. The tool will come with an initial rule file, which the user can add to or modify. When the tool encounters a token that is recognized to require special handling, it will process it automatically according to a set of rule defined by the user in the rule file. After the original token and its contents have been processed, the resulting DTF token will be written to the DTF file. A corresponding CTF token will also be generated and added to the CTF file. Data not requiring special handling will be transferred directly to the DTF file unaltered and no CTF token will be generated. The tool will use a parser to scan the input for candidates for special handling. Candidates are determined by parsing for recognizable patterns defined by the user in the syntax section of the rule file. In a sense, the work involved in generating a DTF file is really a series of substitution the tool makes to some of the tokens in the original HTML input file. The tokens in the HTML file is substituted in the DTF file by tokens that is similar except for the identifier that is added and some attributes or text that is removed. Each substitution will be recorded in a log file that can be used for verification later.

The tool can alternatively operate in manual mode in which the user can navigate to each substitution one at a time. In the manual mode, the user will have more control over each substitution as each substitution can be monitored and controlled but automation is drastically reduced. For example in the manual mode, for each substitution, the user can specify the rule to apply and the name of the identifier to use, whereas in the fully automated mode all decisions are predetermined. In addition, the user may also skip substitution entirely for any particular step, as the defined rule may not yield the desired results in every case.

The creation of SDF files will be accomplished by allowing the user to pick and choose which items from the CTF file to include. Then, phrases along with its names from the actual runtime databases can be displayed, so the user can assign the names of phrases to include in the SDF file for each token.

The purpose of the Screen Template Generator is to provide a tool that can be implemented in a timely fashion to perform the task of automating the generation of CTF, and DTF files. The purpose here is to provide a efficient, specialized tool for template file generation. Thus, in order for the tool to be able to recognize and process HTML accordingly, the user will need to define the syntax and rule for handling them. Not all HTML tags needs to have its syntax and rule defined, only those that require special handling.

In order for the tool to properly recognize the tag, the syntax will have to be communicated to the tool. This can be accomplished via some sort of syntax generator that will be an integral part of the Screen Template Generator itself. For efficiency, the above syntax information will be stored in a format that the Screen Template Generator can process efficiently (not in the format shown above). The information will be stored in a rule file and as mentioned earlier, the tool will come initially with its own rule file, which the user can modify.

Once the tool can recognize the special HTML tags, the next step is to know how to process them.

In creating a DTF file from an HTML template file, there are many possible ways a user can make his/her substitutions for any given HTML tag. This makes it difficult for a tool to automate the process without knowing a rule to handle them.

In the interest of delivering the tool in a timely manner, it makes sense for the user to employ sensible HTML scripting styles to help the tool delimit each HTML command. For example, always end an HTML command with its corresponding terminating tag (e.g., always terminate <FONT>... with </FONT> even though most browser don't require this). This is to help the tool to delimit each command when the HTML file is being processed. Otherwise, the tool would have to have some browser intelligence to recognize when an HTML command ends. The typical browser sometimes knows where a command ends even without a terminating tag because it knows which markup tags are valid within a particular command. Thus, when it sees a new tag that is not a valid markup within the current command, it will assume that the current command has terminated. While a web browser hybrid may be interesting to implement, there isn't the time in this project for that type of work.

The Screen Template Generator Architecture will be component-based and both language and implementation independent. This type of architecture makes it easier to subdivide the work into modules that can be implemented independently should more than one developer be involved in the project.

Presentation will be the primary domain of the User Interface (UI). The UI will present to the user the work in progress by displaying the working CTF, and DTF files as substitutions are made according to the user-specified rules The UI will also be the mechanism by which the user communicates other information with the tool. For example, the UI will provide a means for the user to setup, certain configuration information, such as DTF, CTF, HTM, and Rule file directory locations, the naming convention to use for auto-generation of CTF tokens, etc. In addition, most of the task of generating SDF files will be done in the UI.

One can leverage off any existing or off-the-shelf ActiveX components that may be suitable for deployment in the User Interface design.

The Rule Generator component interacts with the user to create the syntax and rules for HTML tags that require special handling. The syntax allows the Screen Template Generator to recognize these tags, the rules tell it how to process them. It is the responsibility of the Rule Generator to convert the user inputs into the format of a Rule file that the Rule Interpreter can understand. The Rule Interpreter will then communicate the rule information to the tool. By interacting with the Rule Generator, the internal structures of rule file will become transparent to the user.

The Rule Interpreter takes the information in the rule file and translates it to an internal protocol for the Screen Template Generator. This may involve initializing certain data structures used by the Screen Template Generator in its rule handlers. The Screen Template Generator will then use the translated information to process each special token accordingly.

The Rule Handler is a collection of subroutines, which performs the actual act of substituting/replacing elements of an HTML command to convert it a DTF token. The way an HTML command is handled is based on the given rule for a particular HTML tag defined in the rule file. For example, a rule handler for the <INPUT> tag may be a subroutine that removes all except the "NAME" attribute from it and outputs the result as the return value.

The Rule Repository is a collection of rule files. The user may select from amongst a list of the rule files in the repository while running the Screen Template Generator.

The Screen Template Generator will employ one or more Parsers to scan and process the input stream that will consist of data from an HTML file. The parser will consist of state machines to simplify the handling of the lexical analysis and grouping of input into tokens.

The Parser will incorporate a finite state machine, the states of which can be further decomposed into a state machine of its own.

The Activity Logger records each substitution made in generating a DTF file from an HTML input file. The activity information will be kept in a log file, which can be viewed or printed.

The rule file will be divided into two main sections. The first section is a reference section containing information about predefined elements, syntax and rules. This section should not be edited as it is for information purposes only. The Screen Template Generator will be "pre-programmed" to handle these basic items, which serve as building blocks for other elements, syntax, and rules. The second section holds the new items the user defines. These include the tags (elements) to be supported, the syntax to be used to recognize these tags, and the rules to be applied. The rule file is case insensitive but use of case to help improve readability is encouraged.

The Predefined Elements Section contains keywords of basic elements the Screen Template Generator is pre-programmed to understand. These keywords can be used to form the syntax and rule statements of user defined tags:
Attributes ― this keyword is used when defining syntax to represent zero or more attributes within a tag. For example, the <INPUT> tag has the attributes TYPE, NAME, VALUE, SIZE, MAXLENGTH, CHECKED, and ALIGN. The general syntax for it would be <TAG Attributes> ("<TAG Attributes>text" if text is to follow to tag as is in the case of <INPUT TYPE="radio">). This is mapped into Syntax2 in the "Supported Syntax" section.
<TAG> ― this keyword is used when defining syntax to represent any HTML tag.
</TAG> ― this keyword is used when defining syntax to represent the terminator for a particular HTML tag.
<OtherTags > - this keyword is used when defining syntax and rules to represent the markup tags that may appear within a particular HTML tag.
text ― this keyword is used when defining syntax and rules to represent any text string of one or more characters (blanks with no other characters are not considered to be "text")

The Predefined Rules Section contains basic rules the Screen Template Generator is pre-programmed to understand:
BasicTextRule - a rule predefined to handle substitution for text. This rule tells the Screen Template Generator to insert a separate <TXT ID=xxx> token for the text. The text will also be removed before to token is written to the DTF file.
Remove - a rule predefined to remove those elements specified after the "remove" keyword that are contained within the current tag. In addition, "remove" also generates an ID that is to be inserted inside the current tag before writing the resulting token to the DTF file.
Ignore ― this rule will ignore (skip processing) of everything delimited by the current tag. It will be useful for skipping the processing of tokens within scripts.

The Supported Syntax Section contains the basic syntax styles the Screen Template Generator can handle. There are five predefined syntax styles and the user must pick one of these for the syntax of a new tag.
Syntax 1=text - this syntax describes any non blank text in the HTML input stream.
Syntax2=<TAG Attributes> - this syntax describes an HTML command consisting of a tag, followed by zero or more attributes, with no terminating tag. For example: <INPUT TYPE="SUBMIT" VALUE="Register now">
Syntax3=<TAG Attributes></TAG> - this syntax describes an HTML command consisting of a tag, followed by zero or more attributes, followed by terminating tag.
Syntax4=<TAG Attributes>text - this syntax describes an HTML command consisting of a tag, followed by zero or more attributes, followed by some text, with no terminating tag.
Syntax5=<TAG Attributes>text</TAG> - this syntax describes an HTML command consisting of a tag, followed by zero or more attributes, followed by some text, followed by a terminating tag.
Syntax6=<TAG Attributes><Other Tags></TAG> - this syntax describes an HTML command consisting of a tag, followed by zero or more attributes, followed by some other markup tags, followed by a terminating tag. For example: <SELECT NAME="pepper" SIZE="4" MULTIPLE>
<OPTION>Malabar<OPTION>Telicherry<OPTION>Red</SELECT>

The screen template generator is a Windows-based tool with the following preferred system requirements:

| | |
|---|---|
| Processor | 486 or higher |
| Memory | 32 Megabytes |
| Hard disk drive | 50 Megabytes required for software storage |
| Drives | CD-ROM |
| Screen resolution | 800 x 600 minimum screen resolution |
| Operating system | Microsoft Windows NT 4.0, with Service Pack 3 or Windows 95 with Service Pack 2 |
| Tools | Visual Basic 5.0 |
| Browser | Microsoft Internet Explorer 4.0 or higher |

Two input files are required for template generation: a HTML source file and a rule file. When a template file is being generated, a copy of the HTML source is acted upon leaving the original file unchanged. The HTML file contains the application screen elements and the tags. The application screen elements are based on the application's APS and follow specific design guidelines. The tags have object names and parameters which are linked to rule files.

For the rule file, the screen template generator relies on the rules defined for HTML tags to decide on how to generate the device template file and canonical template file output tokens. An initial rule file (rules.ini) with the most common HTML tags along with the corresponding predefined rules is preferably included with the screen template generator. This rule.ini file can be located in the same directory as the screen template generator.

The device template generator work area consists of the device template generator window and the template generator controller panels.

The device template file generator window has three tabs to view the HTML source file, the browser version of the HTML source file, and the working device template file output file after and during template generation.

The device template file generator preferably offers multiple menus, including a file menu, a view menu, a rules menu, and a help menu. The file menu preferably offers (1) Open HTML Source (for locating the HTML source for template generation); (2) Save (for saving the generated canonical template file and device template file output files); (3) Print (for printing the canonical template file, device template file, or HTML files); (4) Print Setup (for configuring the printer); (5) Exit (for exiting the program). The view menu preferably offers (1) Active Rules (for displaying the rules currently loaded and allowing user to view the currently defined tags and the corresponding rules); (2) Status Bar (for toggling the status bar at the bottom of the screen template generator); and (3) Options (for selecting the processing options for template generation). The rules menu preferably offers (1) Change Rule File (for loading a different rule file); (2) Display Active Rules (for displaying the rules currently loaded and allowing the user to view and edit the currently defined tags and their corresponding rules); and (3) Save Rule File As (for saving the currently loaded rule file under a different name). The help menu preferably offers (1) Search for Help (for performing searches on the Help file "DTFgen.hlp") and (2) About DTFgen (containing DTFgen version information).

In a preferred embodiment, the template generation controller window contains four panels. During template processing, the HTML panel displays the specific tag being processed; the rule panel displays the rule that is applied to the tag being processed; the device template file and canonical template file panels display the output generated for the tag being processed; and the Identifier panel displays the identifier generated for the tag being processed. These panels can be docked at the bottom of the work area so that their content and controls can be viewed from a single window.

In a preferred embodiment, before starting template generation, the processing options are chosen. These options are similar to rules in that the options affect the way the output tokens are generated. The options differ from rules in that the options are applied to all defined tags, whereas rules are only applied to the specific tags for which they are defined. Device template generator has three processing options: (1) use existing ID for CTF/DTF token identifier; (2) retain control characters at the end of a string when replacing text with an identifier; and (3) capitalize all generated canonical template file and device template file tokens including attributes and identifiers. The Use Existing ID for CTF/DTF token identifier option looks for pre-existing IDs in the original HTML tag and uses them when generating identifiers for the CTF/DTF output tokens. If no IDs are found, the STG generates one automatically. The Retain Control Characters at the End of a String when Replacing Text with an Identifier option retains certain control characters, such as &nbsp, which appear at the end of a string and are used for formatting purposes. These characters should probably be retained when replacing text with identifiers. This option replaces only the text portion of a string while keeping the control characters at the end of the string intact. The Capitalize All Generated CTF and DTF Tokens including Attributes and Identifiers option converts output to uppercase when generating DTF/CTF tokens. Note that certain tags such as <SCRIPT> contain case-sensitive data and should not be converted to all uppercase.

When generating templates, the device template file generator preferably scrolls through the HTML file to find tokens that need to be converted to a device template file format and converts them. If the device template file generator encounters a token requiring special handling, it automatically processes the token according to a set of rules defined by the rule file. After the original token and its contents have been processed, the resulting DTF tokens are written to the DTF file and the corresponding CTF tokens are written to the CTF file.

In a preferred embodiment, template file generation can be executed automatically or interactively. In the automatic processing mode, all decisions are predetermined. DTFGen moves from tag to tag in the HTML source and can only be interrupted if Stop is selected. Processing resumes when Continue is selected. Limited editing is allowed in this mode.

In the interactive processing mode, the user controls the processing pace. DTFGen moves from tag to tag in the HTML source on command, manually, one substitution at a time. Processing only continues when Next is selected. During a pause, one can create and edit tags, rules, and identifiers or skip a substitution entirely. One can also undo generated output tokens and redo them.

As the DTFGen processes each HTML tag, the DTF and CTF files are populated in the TGC window. Any identifiers are displayed in their respective panel. The amount of editing that can be done during template generation, depends on the processing mode-automatic or interactive. When processing has completed, the results can be viewed in the Working DTF File and a Working CTF file. The template generation control tool offers various functions to control processing, including (1) Help (accesses online help); (2) Reset All (resets HTML content to original tags after processing has begun and clears the DTF and CTF files); (3) Start (starts template generation); (4) Stop; and (5) Continue. In the Automatic mode, the following functions are preferably offered (1)Stop (pauses template generation); (2) Continue (resumes template generation after stopping); (3) Next (selects the next HTML tag for processing); (4) Exit (exits the application and prompts to save before exiting); and (5) Redo/Undo (in undo, the DTF token is reverted back to the original data from the HTML source file and any CTF tokens generated will be removed from the CTF output file; in redo after an undo, the original DTF/CTF tokens generated are kept in the respective output files). In the Automatic mode, template generation must be complete before these functions are available.

In the automatic processing mode, DTFGen automatically generates DTF and CTF files based on the HTML source and the rule file loaded. Processing can be stopped to review the resulting DTF and CTF lists.

To review output, select Stop to interrupt processing and select Continue to resume. In the automatic mode, rules can only be edited before starting template generation. To edit CTF identifiers (during or after template generation): from the Working CTF File, select the CTF token to be edited; from the Identifier text box, type in the new Identifier; DTF and CTF tokens are updated as one types. To edit DTF token output (only after template generation), from the Working CTF File, select the CTF token to be edited and the DTF token is displayed in the DTF Output pane of the TGC; edit the token from this window. To reverse output and revert to HTML tag source (only after template generation), from Working CTF File, select the CTF token and select Undo. To reverse that action, select Redo.

In the interactive mode, the user controls the processing pace. One can process an HTML tag, halt processing to edit a tag or a rule, or bypass a tag, and resume processing.

In the Interactive mode, the DTFGen moves from tag to tag on user command (by selecting the Next button). One can review output at every step.

In the Interactive mode, one can edit CTF tokens, DTF identifiers, and rules at any time. To edit CTF identifiers; from the Working CTF File, select the CTF token to be edited and, from the Identifier text box, type in the new Identifier. DTF and CTF tokens are updated as it progresses. To edit DTF token output, from the Working CTF File pane, select the CTF token to be edited and the DTF token is displayed on the DTF Output pane in the TGC. Edit the token from this pane. To edit a rule, select the DTF in the Working CTF File. The associated rule will be displayed in the rule pane. Then select the rule pane's Edit button. The Active Rules Editor opens. One can edit and apply the changes during the processing session.

The Active Rules Editor is used to create and modify tags, rules, and CTF tokens.

To delete a tag, select Rules |Display Active Rules. In the resulting panel, locate the Defined Tags list, select the tag to be deleted and select the Delete button. A confirmation pop-up message will be displayed.

The screen template generator uses a tag's attributes property during the parsing of the HTML input source file. The attributes for a given tag are simply the valid attributes that the tag can contain. For example, the <Body> tag can contain the attribute BGCOLOR, the <Font> tag can contain the attributes SIZE, COLOR, or FACE. The screen template generator also uses attribute information to build the operation parameters list so one can include or exclude a given attribute as an operation parameter. To edit a tag's attributes, select Rules|Display Active Rules and, from the Defined Tags section, selct the tag to be modified and select the Modify button in the Attributes section. This results in the display of the attributes specification form.

To edit a tag's syntax, select Rules|Display Active Rules and, from the Defined Tags section, select the tag to be modified and select the Modify button in the Syntax section. This result in the display of a Syntax Specification form.

To create a new tag, it is necessary to provide the tag name and qualifier (if required); tag attribute(s); tag syntax; the rule to apply to the tag; CTF tokens to be generated; and the Identifier to be used.

To create new tags, one enters the new tag and the optional qualifier. One need only specify a qualifier if the tag needs to be distinguished from others with the same name. For example, there are several different types of <INPUT> tags. Each can only be distinguished by its "type" attribute (password, check box, radio, and so forth). Then one enters all valid attributes for the tag. Then one selects the syntax for the newly specified tag. To help select the correct syntax for a particular tag, a description of each of the available syntaxes can be displayed at the bottom of the screen. Next one specifies the rule(s) to apply to the HTML tags in generating the output token(s). All rules involve some operation to manipulate the data in the input tags. The most common of these is the "Replace_Specified_Items_with_ID", which will generate a DTF token by removing some or all attributes from an input tag and then generate an identifier and a corresponding CTF token. One may specify more than one rule for a tag. In this case, the tool will apply the rules in the order specified. In the final step, the CTF output tokens to be generated and the Identifier to use are specified. Only the following rules require this step: Replace_Text_With_ID; Replace_Specified_Items_with_ID; and Keep_Only_Specified_Items_Replace_Rest_with_ID. To skip this step, selct Finish without specifying anything if any of the other remaining rules are being used.

The SDF Generator program is used to create and edit screen definition files. An SDF is based on the screen elements found in a Canonical Template File. Each element in the SDF is associated with a phrase name from a phrase database.

Screen Definition Files are subsets of Canonical Template Files. SDF's map CTF element IDs to phrase names. This simplifies the handling of fixed phrases residing in databases. SDF elements can include the phrase names from phrase databases, a media for the element, and a comment describing the element, among others. With the SDFGen tool, new SDF's can be created or existing ones edited. One can also produce a "Missing Phrase Name" report to identify phrase names that are required by the SDF, but are not in the phrase database.

Before creating an SDF file, one must first generate the CTF tokens (using DTFGen) and the phrases these tokens will be linked to (using the phrase editor).

Once one creates an SDF or opens an existing one, three windows are preferably displayed, the CTF window, the SDF window, and the SDF editing form. If the SDF is new, the SDF window will be empty. The CTF window contains CTF tokens resulting from DTF template generation. The CTF's file name and path are displayed on the top of this window. Each line in the CTF is prefixed with a line number that matches the line number on the SDF edit form. SDF file window displays the results of SDF editing. As changes are made, this file is updated. The SDF's file name and path are displayed at the top of this window.

The SDF editing form is used to create SDF's. The form is preferably divided into two panels, (1) CTF - SDF Elements and (2) Edit SDF Elements. The CTF - SDF Elements is a viewing section that provides CTF and SDF information and is updated as the SDF is edited. The Edit SDF Elements contains the editing controls, from which one can select the phrase databases, names, and media. One can also add comments to the SDF. The CTF and SDF windows are used for reference only. One cannot modify either file from these windows. The SDF is not modified until it is saved.

The CTF-SDF Elements panel consists of two sections, the CTF and SDF element descriptions and the element viewing options. The information provided in the descriptions depends on the viewing options selected. These preferably include Line (identifies the CTF line number where the element appears in the CTF file); Changes (tracks phrase name changes since the last time the SDF file was saved); Missing Phrase Names (identifies missing phrase names); Phrase Name Exists (phrase with assigned Media/Format does not exist); Element Type (identifies the element type as defined in the CTF file); Element ID (identifies the element ID as defined in the CTF file); Phrase Name (identifies the phrase name assigned to the element); Media (identifies the media/format for the phrase name assigned to the element); and Comment (displays the comment for the element that will be in the SDF).

An add a comment frame is preferably used to enter comments for an element and to specify where the comment will be placed in the SDF file relative to the element.

The following details the steps when editing the SDF's. All file changes are made using the SDF Edit form. This form's content can change based on the options selected.

Open the SDF by either selecting File New to create a new one or selecting File Open to locate an existing one. Open the database containing the phrases that will be mapped to the selected CTF's. By, from the Phrase Database 1 (and/or Phrase Database 2) frame, select Open to display the database browse dialog, locate and select the database required, in the View Elements frame, select all to see which properties have been assigned. If the phrase has already been mapped, its name will appear in the Phrase Name to Assign text box. If there is a comment, it will appear in the Comment text box. The radio buttons in the Media/Format section will identify the Media/Format for the selected SDF Element. Then select the element to be edited in the CTF-SDF Element list.

To assign a phrase name from a phrase database to a screen definition file, select the phrase name from drop-down list associated with the phrase database. The name appears in the Phrase Name to Assign text box. Then select the Media/Format for the element or accept the default of Text/ RTF. Finally, select Assign. The results are displayed in both the CTF-SDF Elements panel and the SDF file panel.

To assign a phrase name not in a phrase database to a screen definition file, manually enter the Phrase Name in the Phrase Name to Assign text box. Then select the Media/Format for the element or take the default of Text/RTF. Finally, select Assign. The results are displayed in both the CTF-SDF Elements panel and the SDF file panel.

To remove a phrase name from the SDF Element, select the element and select Delete.

The screen definition file generator can produce a report of Phrase Names that are assigned to elements but are not in either of the phrase databases. These are referred to as Missing Phrase Names. Use the File Save Missing List menu to generate a text file with this report. A sample file is:

The Screen Template Generator relies on the properties and rules defined for all tags in order to recognize and handle them properly.

The STG uses the syntax property to identify a defined tag within the source HTML input file. It is important to specify the syntax properly since the tool uses the syntax information to determine the starting and ending locations of a tag when it is being parsed in the input HTML file. Exemplary syntax include:
Syntax 1=text specifies a standalone text string. This syntax pattern will be recognized only when no other defined text markup tag precedes the text string.
Syntax2=<TAG Attributes> specifies a syntax that describes an HTML tag with zero or more attributes. The terminating tag is optional for this syntax.
Syntax3=<TAG Attributes></TAG> specifies a syntax that describes an HTML tag with zero or more attributes, followed by a terminating tag. The terminating tag is required.
Syntax4=<TAG Attributes>text specifies a syntax that describes an HTML tag with zero or more attributes, followed by some text. The terminating tag is optional for this syntax. (e.g. <B>, <FONT>, <H1> - <H6>, etc).
Syntax5=<TAG Attributes>text</TAG> specifies a syntax that describes an HTML tag with zero or more attributes, followed by some text, followed by a terminating tag. The terminating tag is required. The previous syntax is used if the user is not sure whether a terminating tag exists for all instances of the tag.
Syntax6=<TAG Attributes><OtherTags><fTAG> specifies a syntax that describes an HTML tag with zero or more attributes, followed by some other markup tags (which may contain attributes and text), followed by a terminating tag. Terminating tag is required. (for example, <!-->, <SCRIPT>, <SELECT>).

The rule property consists of three parts: name, operation, and operation parameters. Note that one may specify more than one rule for a tag. If more than one is specified, the tool will simply apply the rules in the order specified. Name specifies the name assigned to the rule. This is automatically generated and has the form Rule#n, where n is the number of rules specified.

Operation specifies one of the predefined operations available, such as, delete, ignore, insert_{%ID=_INFRASCRIPT%},
insert_bgcolo={%ID=APPBODYBGCOLOR%}, Insert_End_Tag,
Keep_Only_Specified_Items_Replace_Rest_with_ID, Process_SUBS_Ids,
Replace_Text_With_ID, Replace_Specified_Items_with_ID, Substitute_Title

This operation replaces the current title with the specified substitution string. This operation is intended for the <TITLE> tag only.

Operation Parameters specifies the parameters for the chosen operation. For example, if the operation is "Keep_Only_Specified_Items_Replace_Rest_with_ID" and the parameter is "Type", then everything within the tag except the attribute "Type" will be replaced with an Identifier.

The Token Property consists of two parts: Identifier, and CTF Token. The Identifier is used to generate the CTF and DTF tokens when the Screen Template Generator encounters a tag in the HTML input file that has been defined with a rule for generating the DTF output token. The Identifier specifies the ID name to be used in the generated CTF and DTF tokens. The CTF Token specifies one of the supported CTF Tokens:

Various preferred embodiments of the invention have been described in fulfillment of the various objects of the invention. It should be recognized that these embodiments are merely illustrative of the principles of the invention. Numerous modifications and adaptations thereof will be readily apparent to those skilled in the art without departing from the spirit and scope of the present invention.

## Claims

1. An automated system for creating and customizing a screen display, comprising:
a customizer user interface for interactively presenting a sequence of customizer dialogs each having one or more controls, the controls being responsive to input from a writer of the application project generator to thereby choose from a plurality of generator options; and
a customizer tool being responsive to the customizer user interface for creating a screen according to the generator options chosen by the writer, the application project generator comprising:
a device template file generator for generating and editing canonical template files and device template files;
a screen template generator for generating and editing screen template files;
a plurality of canonical template files,
a plurality of screen definition files, and
a plurality of device templates files; and
wherein the screen display is created in HyperText markup language.

2. The automated system for creating and customizing a screen display according to Claim 1, wherein the device template file generator comprises a device template file generator window and a template generation control window.

3. The automated system for creating and customizing a screen display according to Claim 1, wherein the device template file generator automatically generates the device template file.

4. The automated system for creating and customizing a screen display according to Claim 1, wherein the device template file generator prompts a user when generating the device template file.

5. The automated system for creating and customizing a screen display according to Claim 1, wherein the system further comprises a rule generator.

6. The automated system for creating and customizing a screen display according to Claim 1, wherein the system further comprises a rule interpreter.

7. The automated system for creating and customizing a screen display according to Claim 1, wherein the system further comprises a rule handler.

8. The automated system for creating and customizing a screen display according to Claim 1, wherein the system further comprises a rule repository.

9. The automated system for creating and customizing a screen display according to Claim 1, wherein the system further comprises a parser.

10. The automated system for creating and customizing a screen display according to Claim 1, wherein the system further comprises an activity logger.
